# EUROPÄISCHE PATENTSCHRIFT

(11) **EP 2 883 259 B1**
(45) Veröffentlichungstag und Bekanntmachung des Hinweises auf die Patenterteilung: **06.04.2016**
(21) Anmeldenummer: 13739354.2
(22) Anmeldetag: 11.07.2013
(51) Int. Cl.: H01M 2/10, H01M 2/20, H01M 2/30, B60L 11/18, H01M 10/6556, H01M 10/6557, H01M 10/625, H01M 10/613

(54) **BATTERIE, INSBESONDERE FÜR EIN KRAFTFAHRZEUG, UND KRAFTFAHRZEUG**
BATTERY, MORE PARTICULARY FOR A MOTOR VEHICLE, AND MOTOR VEHICLE
BATTERIE, EN PARTICULIER POUR VÉHICULE AUTOMOBILE, ET VÉHICULE AUTOMOBILE

(30) Priorität: 10.08.2012 DE 102012015910
(43) Veröffentlichungstag der Anmeldung: 17.06.2015
(73) Patentinhaber: Audi AG, 85045 Ingolstadt (DE)
(72) Erfinder: RANZINGER, Roman, 85080 Gaimersheim (DE)
(74) Vertreter: Herbst, Matthias Heinz
(86) Internationale Anmeldenummer: PCT/EP2013/002045
(87) Internationale Veröffentlichungsnummer: WO 2014/023387

(56) Entgegenhaltungen:
- EP-A1- 2 284 930
- EP-A1- 2 337 112
- JP-A- 2004 095 357
- US-A1- 2006 166 086

## Beschreibung

Die Erfindung betrifft eine Batterie, insbesondere für ein Kraftfahrzeug, welche eine Mehrzahl von Batteriezellen umfasst. Jede der Batteriezellen weist in einem Kopfbereich ein erstes elektrisches Kontaktelement mit einer ersten Polarität und ein zweites elektrisches Kontaktelement mit einer zweiten Polarität auf. Wenigsten zwei der Batteriezellen sind mittels eines jeweiligen, den Kontaktelementen gleicher Polarität zugeordneten Verbindungselements elektrisch parallel geschaltet. Des Weiteren betrifft die Erfindung ein Kraftfahrzeug mit einer solchen Batterie.

Um Elektrofahrzeuge oder Hybridfahrzeuge mit elektrischer Energie zu versorgen, werden üblicherweise Hochvoltbatterien eingesetzt. Solche Hochvoltbatterien können in rein elektrisch betriebenen Elektrofahrzeugen zum Einsatz kommen oder in Elektrofahrzeugen, welche über einen verbrennungsmotorischen Reichweitenverlängerer (Range Extender) verfügen. Auch bei Hybridfahrzeugen, bei welchen die Batterie durch Anschließen an eine Stromversorgung aufgeladen werden kann, also bei sogenannten Plug-In-Hybridfahrzeugen, kommen Hochvoltsysteme zum Einsatz. Dies gilt jedoch auch für Hybridfahrzeuge ohne Plug-In-Funktion. In solchen Hochvoltbatterien werden eine Vielzahl von einzelnen Batteriezellen parallel und in Reihe geschaltet. Die einzelnen Batteriezellen können prismatisch, insbesondere im Querschnitt rechteckig, oder zylindrisch sein. Des Weiteren können sogenannte Pouch-Zellen oder Coffeebag-Zellen zum Einsatz kommen, welche auch als Folienzellen bezeichnet werden.

Die Batteriezellen werden je nach Anforderung in unterschiedlichen Konfigurationen verschaltet. Wenn zum Beispiel zwei Batteriezellen elektrisch parallel geschaltet sind und von diesen parallel geschalteten Paaren von Batteriezellen viele in Serie geschaltet sind, so spricht man von einem 2p-System. Entsprechend sind bei einem 4p-System vier einzelne Batteriezellen elektrisch parallel geschaltet, wobei dann jeweils Blöcke oder Stapel von vier solchen elektrisch parallel geschalteten Batteriezellen in Serie geschalten sind, um eine entsprechend hohe Spannung zu generieren.

Bei prismatischen Batteriezellen wird die Parallelverschaltung durch Verbindungselemente erreicht, welche auch als Busbars oder Stromschienen bezeichnet werden. Die Busbars werden auf die elektrischen Pole der Batteriezellen aufgelegt und mit diesen elektrischen Polen verbunden. Als Fügeverfahren sind hierbei das Verschrauben oder auch das Verschweißen üblich.

Zum seriellen Verbinden von Batteriezellen miteinander sind jedoch auch elektrisch leitfähige Klebstoffe bekannt. Die DE 10 2007 004 914 A1 beschreibt beispielsweise eine Knopfzelle, welche für einen Hochspannungsaktuator einen sehr geringen Strom, jedoch eine hohe Spannung bereitstellt. Eine Mehrzahl von elektrochemischen Batteriezellen sind in der Knopfzelle elektrisch in Reihe geschaltet. Hierbei kontaktieren in einem Kopfbereich der Batteriezellen angeordnete Anoden die jeweiligen in einem Fußbereich der Batteriezellen angeordneten Kathoden benachbarter Batteriezellen über einen elektrisch leitenden Klebstoff.

Die EP 2 284 930 A1 beschreibt eine Batterie mit einer ersten Batteriezelle und einer zweiten Batteriezelle, welche jeweils Kontaktelemente in Form von Pluspolen und Minuspolen aufweisen. Über ein Verbindungselement mit einer ersten Stromschiene und einer zweiten Stromschiene werden jeweils die Pluspole und die Minuspole der Batteriezellen durch Verschweißen verbunden. So werden die beiden Batteriezellen elektrisch parallel geschaltet. Bevor das Verbindungselement so gefaltet wird, dass die beiden Batteriezellen aufeinander liegen, liegen sich Kopfbereiche der elektrisch parallel geschalteten Batteriezellen einander gegenüber, die Kopfbereiche sind also einander zugewandt.

Die JP 2004 095 357 A beschreibt eine Batterie mit einer Mehrzahl von Batteriezellen, wobei jede der Batteriezellen in einem Kopfbereich ein erstes elektrisches Kontaktelement mit einer ersten Polarität und ein zweites elektrisches Kontaktelement mit einer zweiten Polarität aufweist. In einem ersten Block sind drei der Batteriezellen elektrisch in Reihe geschaltet. In einem weiteren Block sind ebenfalls drei der Batteriezellen elektrisch in Reihe geschaltet. Mittels in ein flexibles Substrat eingebetteter Leitungsbahnen werden die Blöcke elektrisch parallel geschaltet.

Die US 2006/0166086 A1 beschreibt eine Batterie mit einer Mehrzahl von Batteriezellen. Jede der Batteriezellen weist in einem Kopfbereich nebeneinander liegende negative und positive Kontaktelemente oder Pole auf. Jeweils zwei der Batteriezellen sind elektrisch parallel geschaltet. Hierbei sind die Kopfbereiche der elektrisch parallel geschalteten Batteriezellen einander zugewandt. In einem Verbindungselement sind Oberflächen von nebeneinander angeordneten und Verdrahtungsmuster bildenden Metallblechstreifen mit einer Isolierbahn versehen. Im Bereich von Anschlussflächen sind die jeweiligen gleichnamigen Pole der miteinander parallel geschalteten Batteriezellen mit einem entsprechenden Metallblechstreifen verbunden. Die Minuspole zweier elektrisch parallel geschalteter Batteriezellen sind hierbei mit einer Oberseite eines ersten Metallblechstreifens verlötet und die Pluspole mit einer Unterseite eines zweiten Metallblechstreifens.

Die EP 2 337 112 A1 beschreibt eine Batterie mit einer Mehrzahl von Batteriezellen, bei welcher ein Tragrahmen vorgesehen ist, welcher als von einem Kühlmittel durchströmbare Kühlplatte ausgebildet ist.

Die DE 10 2008 040 341 A1 beschreibt einen Akkumulator für ein Elektrowerkzeug, bei welchem Zellköpfe von einzelnen Batteriezellen des Akkumulators über einen Zellenverbinder elektrisch leitend miteinander verbunden sind. Der Zellenverbinder ist über eine elektrische Leitung mit einem Elektronikbauteil verbunden, wobei ein Ende der Leitung ein Kontaktplättchen aufweist. Das Kontaktplättchen ist mittels eines elektrisch leitfähigen Klebstoffs auf den Zellenverbinder aufgeklebt. Die im Betrieb stromführenden Zellenverbinder sind mit den Zellköpfen der einzelnen Batteriezellen verschweißt.

Die EP 1 912 269 B1 beschreibt ein prismatisches Batteriemodul mit einer Mehrzahl von Batteriezellen, wobei die positiven und negativen elektrischen Pole einer jeweiligen Batteriezelle an gegenüberliegenden Seiten der Batteriezelle angeordnet sind. Jeweils ein positiver elektrischer Pol einer ersten Batteriezelle ist mit einem negativen elektrischen Pol einer benachbarten Batteriezelle über einen Kollektor verbunden, wobei ein elektrisch leitfähiger Klebstoff zum Einsatz kommt.

Aufgabe der vorliegenden Erfindung ist es, eine Batterie der eingangs genannten Art sowie ein Kraftfahrzeug mit einer solchen Batterie zu schaffen, bei welcher sich eine besonders kompakte Bauform realisieren lässt.

Diese Aufgabe wird durch eine Batterie mit den Merkmalen des Patentanspruchs 1 und durch ein Kraftfahrzeug mit den Merkmalen des Patentanspruchs 7 gelöst. Vorteilhafte Ausgestaltungen mit zweckmäßigen Weiterbildungen der Erfindung sind in den abhängigen Patentansprüchen angegeben.

In der erfindungsgemäßen Batterie sind die Kopfbereiche der wenigstens zwei elektrisch parallel geschalteten Batteriezellen einander zugewandt. Hierbei sind die Kontaktelemente gleicher Polarität der wenigstens zwei elektrisch parallel geschalteten Batteriezellen mit dem jeweiligen Verbindungselement stoffschlüssig verbunden. Dem liegt die Erkenntnis zu Grunde, dass bei einem Fügeverfahren, welches der Verbindung des Verbindungselements mit den elektrischen Kontaktelementen beispielsweise durch Verschrauben dient, ein Zugriff auf die Fügestelle vom Kopfbereich her notwendig ist. Nur so ist gewährleistet, dass beispielsweise ein Schraubwerkzeug an einer Schraube angesetzt werden kann. Bei einem solchen Fügeverfahren kann dann nicht eine nächste Batteriezelle mit dem Kopfbereicht direkt an dasselbe Verbindungselement angefügt werden.

Dies ist jedoch bei der vorliegend beschriebenen stoffschlüssigen Verbindung der Kontaktelemente der elektrisch parallel geschalteten Batteriezellen mit dem Verbindungselement möglich. Dies liegt daran, dass das jeweilige Verbindungselement zwischen den beiden Kontaktelementen gleicher Polarität der mit ihren Kopfbreichen einander zugewandten Batteriezellen angeordnet ist. Zudem wird ein und dasselbe Verbindungselement für die mit den Kopfbereichen einander zugewandten Batteriezellen genutzt, sodass sich eine besonders kompakte Bauform der Batterie realisieren lässt. Die beiden elektrisch parallel geschalteten Batteriezellen können nämlich direkt aneinander gefügt werden.

Auch ist das jeweilige Verbindungselement besonders einfach gestaltet und gemäß der Erfindung als im Querschnitt rechteckige Stromschiene ausgebildet, deren Oberseiten und Unterseiten mit den Kontaktelementen gleicher Polarität der wenigsten zwei elektrisch parallel geschalteten Batteriezelle verbunden sind. Etwaige Durchtrittsöffnungen in dem Verbindungselement, welche üblicherweise zum Kontaktieren von zu verschweißenden oder zu verschraubenden Bolzen der Terminals vorgesehen sind, können also entfallen.

Die Verwendung desselben Verbindungselements für die Batteriezellen, deren Kopfbereiche einander zugewandt sind, bringt auch den Vorteil einer Gewichtseinsparung mit sich, da im Vergleich zu einer Anordnung derselben Anzahl an Batteriezellen nebeneinander ein kürzeres Verbindungselement ausreichend ist. Da im Betrieb der Batterie der Strom so einen besonders kurzen Weg durch das Verbindungselement zurücklegen muss, ist auch der Widerstand des Verbindungselements geringer. Des Weiteren wird weniger Material für das Verbindungselement benötigt.

In einer vorteilhaften Ausgestaltung der Erfindung sind die Kontaktelemente gleicher Polarität mit dem zwischen diesen angeordneten Verbindungselement mittels eines elektrisch leitfähigen Klebstoffs verbunden. Dem liegt die Erkenntnis zu Grunde, dass selbst das Fügen der Kontaktelemente mit dem Verbindungselement durch Verschweißen einen nicht immer leicht zu bewerkstelligenden Zugriff auf die Fügestelle erfordert. Wird jedoch der elektrisch leitfähige Klebstoff verwendet, um die Kontaktelemente mit dem Verbindungselement zu verbinden, so ist kein Zugriff mit einem Schweißgerät oder einem Schraubwerkzeug auf die Fügestelle erforderlich. Vielmehr werden die Kontaktelemente einfach in den elektrisch leitfähigen Klebstoff eingedrückt, und der Klebstoff härtet anschließend aus. So kann besonders einfach das Verbindungselement direkt zwischen die beiden mit den Kopfbereichen einander zugewandten Batteriezellen eingefügt werden.

Auch lässt sich so ein besonders geringer Übergangswiderstand realisieren, da ein sehr inniger Kontakt zwischen den Kontaktelementen und dem Verbindungselement realisiert ist.

Eine besonders flache Bauweise der Batterie lässt sich erreichen, wenn die Kontaktelemente gleicher Polarität eine jeweilige flache Stirnseite aufweisen, welche mit dem Verbindungselement in Anlage ist. Auf aus dem Stand der Technik bekannte Schraubbolzen, welche an dem auch als Terminal bezeichneten Kontaktelement der jeweiligen Batteriezelle angeordnet sind, wenn diese mit dem Verbindungselement verschraubt werden sollen, kann so verzichtet werden. Dies vereinfacht den Aufbau der Batteriezellen. Zudem entfällt der ansonsten von den Schraubbolzen eingenommene Zwischenraum zwischen zwei übereinander angeordneten Batteriezellen.

Prinzipiell lässt sich die Verbindung der elektrisch parallel geschalteten Batteriezellen über das in deren Kopfbereichen angeordnete Kontaktelement mit dem Verbindungselement auch dann realisieren, wenn eine ungerade Anzahl an parallel geschalteten Batteriezellen vorgesehen ist. Da dann jedoch einer Einzelnen der jeweiligen Batteriezellen keine ihr mit dem Kopfbereich direkt gegenüberliegend angeordnete Batteriezelle zugeordnet ist, ist dies dann weniger wünschenswert, wenn es gilt, eine besonders kompakte Batterie zu schaffen.

Bevorzugt ist daher mittels eines jeweiligen, die Kontaktelemente gleicher Polarität kontaktierenden Verbindungselements ein Vielfaches von zwei Batteriezellen elektrisch parallel geschaltet. So können anstelle von oder zusätzlich zu 2p-Schaltungen etwa 4p-Schaltungen, 6p-Schaltungen oder 8p-Schaltungen realisiert werden, bei welchen jeweils zwei, vier, sechs bzw. acht Batteriezellen elektrisch parallel geschaltet sind. Werden jeweils Vielfache von zwei Batteriezellen elektrisch parallel geschaltet, so lassen sich besonders gut weiter miteinander verschaltbare und einen vorhandenen Bauraum gut ausnutzende Blöcke von Batteriezellen oder Zellpakete realisieren.

In einer weiteren vorteilhaften Ausgestaltung der Erfindung weisen die Batteriezellen jeweilige Fußbereiche auf, welche den Kopfbereichen gegenüberliegen. Zumindest einer der Fußbereiche der wenigstens zwei elektrisch parallel geschalteten Batteriezellen ist mit einer Kühleinrichtung in Anlage. So kann im Betrieb der Batterie entstehende Wärme besonders gut von dieser abgeführt werden. Dies gilt insbesondere, wenn die Kühleinrichtung von einem Kühlmedium durchströmbar ist.

Hierbei hat es sich als vorteilhaft gezeigt, wenn die Batterie ein erstes Zellpaket mit den wenigstens zwei elektrisch parallel geschalteten Batteriezellen und ein zweites Zellpaket mit den wenigstens zwei elektrisch parallel geschalteten Batteriezellen umfasst, wobei einander zugewandet Fußbereiche der Batteriezellen der beiden Zellpakete mit derselben Kühleinrichtung in Anlage sind. Dadurch, dass hierbei anstelle von zwei Kühleinrichtungen eine gemeinsame Kühleinrichtung zum Einsatz kommt, welche zwischen den beiden Zellpaketen angeordnet ist, lässt sich eine deutliche Gewichtseinsparung und eine deutliche Kosteneinsparung erreichen.

Das erfindungsgemäße Kraftfahrzeug weist eine erfindungsgemäße Batterie auf. Hierbei fällt eine durch die Kopfbereiche der wenigstens zwei elektrisch parallel geschalteten Batteriezellen definierbare Ebene zumindest im Wesentlichen mit einer Fahrzeughochrichtung zusammen. Dann schützen nämlich die von den Kontaktelementen verschiedenen Grundkörper einer jeweiligen Batteriezelle, also die jeweiligen Zellgehäuse, besonders gut die Kopfbereiche vor einer unfallbedingten Kraftbeaufschlagung. Dies gilt insbesondere, wenn die durch die Kopfbereiche der Batteriezellen definierbare Ebene genau mit der Fahrzeughochrichtung zusammenfällt.

Schließlich hat es sich als vorteilhaft gezeigt, wenn durch wenigstens eine Kühleinrichtung der Batterie eine die Kopfbereiche vor einer unfallbedingten Kraftbeaufschlagung schützende Seitenwand der Batterie bereitgestellt ist. Dann liegen nämlich die Verbindungselemente innen, und die Kühleinrichtung hat eine Doppelfunktion als Seitenwand, welche einerseits der Kühlung dient und andererseits dem Einhausen der Batterie. So ist eine besonders gut vor einer Beschädigung bei einer unfallbedingten Kraftbeaufschlagung geschützte Batterie bereitgestellt.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen, in welchen gleiche oder funktionsgleiche Elemente mit identischen Bezugszeichen versehen sind. Dabei zeigen:
- Fig. 1: schematisiert eine Batterie für ein Kraftfahrzeug, bei welcher die elektrischen Pole zweier elektrisch parallel geschalteter Batteriezellen, deren Kopfbereiche einander zugewandt sind, mit zwischen den elektrischen Polen angeordneten Stromschienen verklebt sind;
- Fig. 2: schematisiert eine Batterie mit acht solchen elektrisch parallel geschalteten Batteriezellen;
- Fig. 3: schematisiert eine Batterie mit zwei Zellpaketen, wobei zwischen den beiden Zellpaketen eine gemeinsame Kühlplatte angeordnet ist;
- Fig. 4: schematisiert eine Batterie, bei welcher die Kühlplatten Seitenwände der Batterie bilden;
- Fig. 5: schematisiert eine Batterie gemäß dem Stand der Technik, bei welcher die Stromschienen für eine Reihenschaltung von jeweils zwei elektrisch parallel geschalteten Batteriezellen sorgen; und
- Fig. 6: schematisiert eine Batterie mit derselben Anzahl von elektrisch in Reihe und parallel geschalteten Batteriezellen wie in Fig. 5, wobei die Kopfbereiche der elektrisch parallel geschalteten Batteriezellen einander zugewandt und die elektrischen Pole dieser Batteriezellen mit jeweils gemeinsamen Stromschienen verklebt sind.

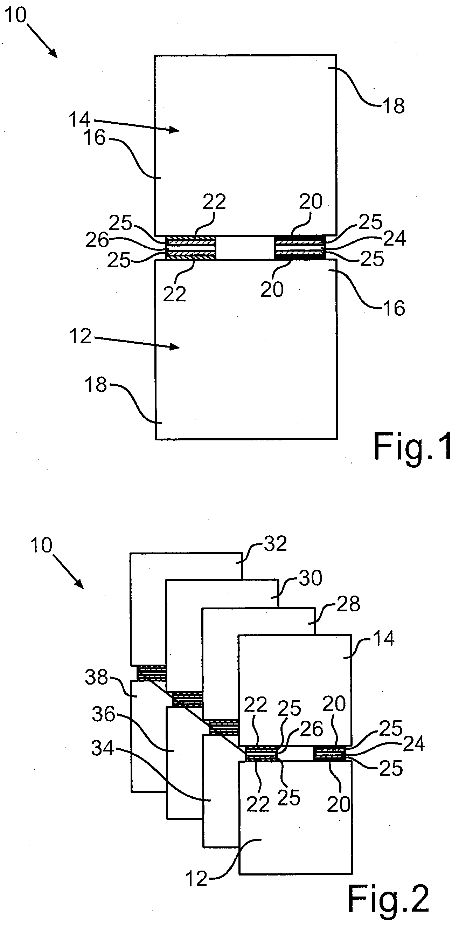

Von einer Batterie 10 für ein Kraftfahrzeug, welche als Traktionsbatterie ausgebildet ist, sind in Fig.1 eine erste Batteriezelle 12 und eine zweite Batteriezelle 14 gezeigt. Die beiden Batteriezellen 12, 14 sind vorliegend als prismatische, und zwar im Querschnitt eine Rechteckform aufweisende Batteriezellen 12, 14 ausgebildet, welche einen jeweiligen Kopfbereich 16 und einen jeweiligen Fußbereich 18 aufweisen. Im Kopfbereich 16 einer jeden der Batteriezellen 12, 14 befinden sich elektrische Kontaktelemente mit unterschiedlicher Polarität, nämlich ein Pluspol 20 und ein Minuspol 22. Diese Pole oder Terminals weisen vorwiegend flache Stirnseiten auf, es sind also keine Anschlussbolzen oder dergleichen vorgesehen, sondern die Terminals sind oberseitig eben.

Die in Fig. 1 obere Batteriezelle 14 steht auf dem Kopf. Folglich sind die Kopfbereiche 16 der beiden Batteriezellen 12, 14 einander zugewandt. Auch die jeweiligen Pluspole 20 und Minuspole 22 der Batteriezellen 12, 14 liegen sich gegenüber. Zwischen den beiden Pluspolen 20 einerseits und zwischen den beiden Minuspolen 22 andererseits ist eine jeweilige Stromschiene 24, 26 angeordnet, welche auch als Busbar bezeichnet wird. Die Stromschienen 24, 26 dienen im Betrieb der Batterie 10 dem Abführen von Strom der Batteriezellen 12, 14 bzw. beim Laden derselben dem Einbringen von Strom.

Diese Strom leitenden Busbars oder Stromschienen 24, 26 sind vorliegend im Querschnitt rechteckig ausgebildet und mittels eines elektrisch leitfähigen Klebstoffs 25 mit den jeweiligen Polen gleicher Polarität verbunden. So sind die Pluspole 20 der beiden Batteriezellen 12, 14 mit der in Fig. 1 rechten Stromschiene 24 und die Minuspole 22 mit der in Fig. 1 linken Stromschiene 26 verklebt. Auf diese Weise sind die beiden Batteriezellen 12, 14 elektrisch parallel geschaltet.

Dadurch, dass der elektrisch leitfähige Klebstoff 25 zum Verbinden der Pole gleicher Polarität mit der jeweiligen Stromschiene 24, 26 verwendet wird, braucht beim Fügen dieser Bauteile die Fügestelle nicht zugänglich zu sein, wie dies beispielsweise beim Verschrauben oder Verschweißen eines elektrischen Pols einer Batteriezelle mit einer Stromschiene der erforderlich ist.

Die flachen Terminals, also die Pluspole 20 und die Minuspole 22, werden vielmehr einfach in den elektrisch leitfähigen Klebstoff 25 eingedrückt, und dieser härtet anschließend aus. Bei dem elektrisch leitfähigen Klebstoff 25 kann eine Beimischung von beispielsweise Silber, Kupfer oder eines sonstigen leitfähigen Materials in eine nicht leitfähige Matrixsubstanz des Klebstoffs 25 diesem die elektrische Leitfähigkeit verleihen. Es sind jedoch auch andere Technologien einsetzbar, um den elektrisch leitfähigen Klebstoff 25 zu erhalten.

Bei der schematisch gezeigten Batterie 10 gemäß Fig. 1 sind zwei Batteriezellen 12, 14 elektrisch parallel geschaltet, es ist also ein sogenanntes 2p-System realisiert. Eine Vielzahl solcher die beiden Batteriezellen 12, 14 umfassenden Einheiten kann anschließend elektrisch in Reihe geschaltet werden, um eine entsprechend hohe Spannung der Batterie 10 sicherzustellen.

Wie aus Fig. 2 ersichtlich ist, können auch beliebige Vielfache solcher Paare von Batteriezellen 12, 14 elektrisch parallel geschaltet werden, indem die jeweiligen Pole oder Kontaktelemente gleicher Polarität mit der diesen zugeordneten Stromschiene 24, 26 stoffschlüssig verbunden werden.

Während also in Fig. 1 eine sogenannte 2p-Schaltung gezeigt ist, bei welcher zwei Batteriezellen 12, 14 elektrisch parallel geschaltet sind, ist in Fig. 2 beispielhaft eine 8p-Verschaltung gezeigt. Hierbei stehen vier in Fig. 2 obere Batteriezellen 14, 28, 30, 32 auf dem Kopf, und ihre jeweiligen Minuspole 22 fluchten in Richtung der diese miteinander koppelnden Stromschiene 26. Ebenso sind alle Pluspole 20 der in Fig. 2 oberen vier Batteriezellen 14, 28, 30, 32 mit der gleichen Stromschiene 24 verbunden wie die Pluspole 20 der in Fig. 2 unteren vier Batteriezellen 12, 34, 36, 38. Bevorzugt umfasst ein solcher Zellenverbund oder Zellpaket mit den jeweils elektrisch parallel geschalteten Batteriezellen 12, 14, 28, 30, 32, 34, 36, 38 ganzzahlige Vielfache und zwei Batteriezellen. Es kann jedoch auch eine ungerade Anzahl von Batteriezellen auf die oben beschriebene Weise elektrisch parallel geschaltet werden.

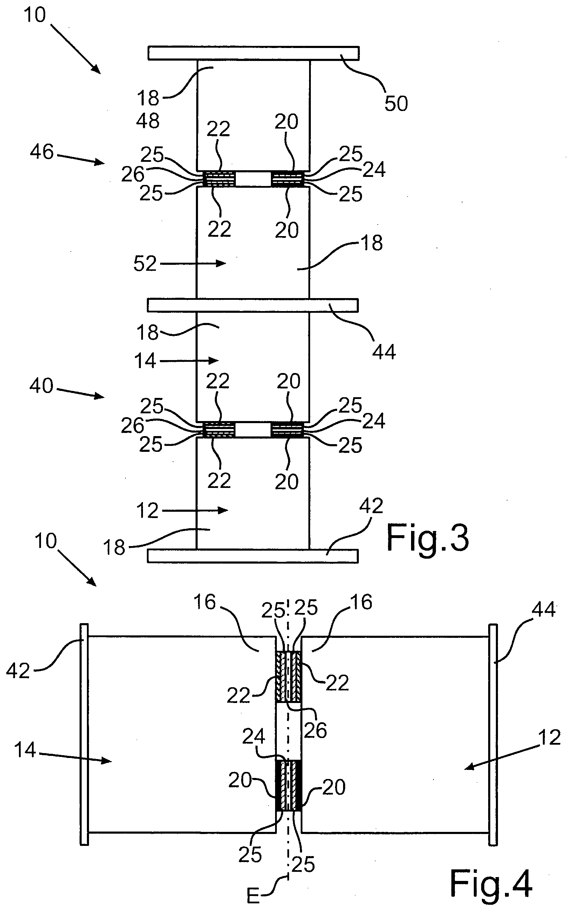

Bei der in Fig. 3 gezeigten Batterie 10 ist ein erstes Zellpaket 40 mit jeweils in einem 2p-System elektrisch parallel geschalteten Batteriezellen 12,14 gezeigt. Zur Kühlung dieses Zellpakets 40 sind zwei im Betrieb der Batterie 10 von einem Kühlmittel durchströmte Kühlplatten 42, 44 vorgesehen, welche mit den jeweiligen Fußbereichen 18 der in dem Zellpaket 40 angeordneten Batteriezellen 12, 14 in Anlage sind. Mit anderen Worten steht die in Fig. 3 untere Batteriezelle 12 mit ihrem Fußbereich 18 auf einer unteren Kühlplatte 42 auf, und die in Fig. 3 zweite Kühlplatte 44 liegt oberseitig auf der auf dem Kopf stehend Batteriezelle 14 auf.

Diese zweite Kühlplatte 44 dient jedoch zugleich der Kühlung eines zweiten Zellpakets 46, welches so wie das erste Zellpaket 40 aufgebaut ist. Hierbei ist der Fußbereich 18 einer in Fig. 3 auf dem Kopf stehenden Batteriezelle 48 des Zellpakets 46 mit einer weiteren, dritten Kühlplatte 50 in Anlage. Zugleich steht eine untere Batteriezelle 52 des Zellpakets 46 mit ihrem Fußbereich 18 auf der mittleren Kühlplatte 40 auf. Somit dient die in Fig. 3 mittlere Kühlplatte 40 sowohl dem Kühlen des unteren Zellpakets 40 als auch dem Kühlen des oberen Zellpakets 46.

Die beiden Zellpakete 40, 46 umfassen also vier Ebenen von Batteriezellen 12, 14, 52, 48, wobei die drei Kühlplatten 42, 44, 50 ausreichend sind, um diese vier Zellebenen zu kühlen. Bei konventionellen Hochvoltbatterien, bei welchen keine Batteriezellen auf dem Kopf stehen, wären hingegen vier Kühlplatten vorzusehen. Die Verwendung der gemeinsamen Kühlplatte 44 für die beiden Zellpakete 44, 46 bringt also eine deutliche Gewichtsersparnis und Kostenersparnis mit sich.

Bei der in Fig. 4 schematisch gezeigten Batterie 10 ist das untere Zellpaket 40 gemäß Fig. 3 um 90° gekippt gezeigt. Bei dieser Anordnung der Batterie 10 bilden also die beiden Kühlplatten 42, 44 Seitenwände der Batterie 10. Die Kopfbereiche 16 der elektrisch parallel geschalteten Batteriezellen 12, 14 sind hierbei, ebenso wie die mit den Pluspolen 20 bzw. den Minuspolen 22 mittels des elektrisch leitfähigen Klebstoffs 25 verbundenen Stromschienen 24, 26, innen liegend angeordnet.

Durch die Seitenwände ist also ein guter Crash-Schutz bereitgestellt, und diese weisen eine Doppelfunktion als Kühlplatten 42, 44 einerseits und als Einhausung andererseits auf.

Eine in Fig. 4 gezeigte Einbaulage der Batterie 10 im Kraftfahrzeug ist hierbei derart gewählt, dass eine Ebene E, welche zu den Kopfbereichen 16 der elektrische parallel geschalteten Batteriezellen 12, 14 parallel ist, mit der Fahrzeughochrichtung zusammenfällt. So ist durch die Kühlplatten 42, 44, welche zugleich als Seitenwände dienen, ein Schutz vor einer Beschädigung von im Kopfbereich 16 der Batteriezellen 12, 14 angeordneten Komponenten bei einer unfallbedingten Kraftbeaufschlagung bereitgestellt.

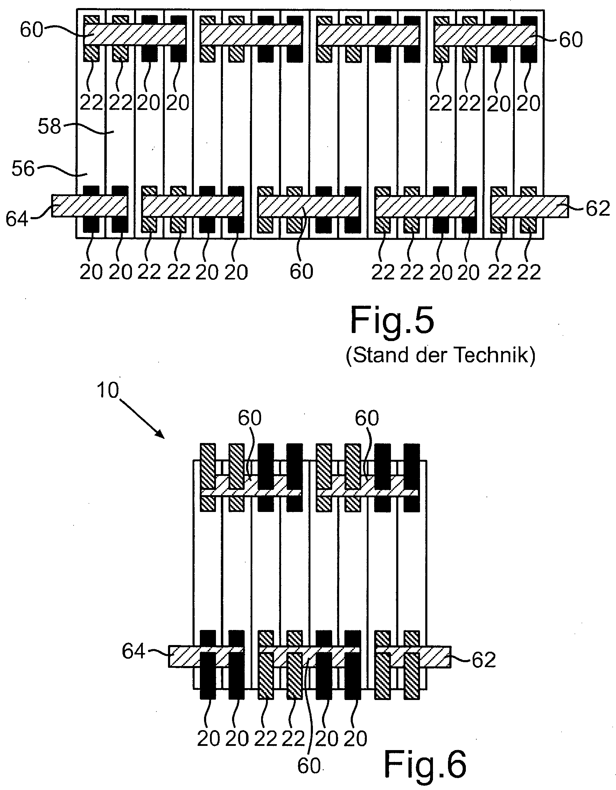

Fig. 5 zeigt eine Batterie 54 gemäß dem Stand der Technik, bei welcher immer jeweils zwei benachbarte Batteriezellen 56, 58 elektrisch parallel geschaltet sind. Es ist also eine 2p-Schaltung realisiert. Jeweils eine solche Zweiergruppe von elektrisch parallel geschalteten Batteriezellen 56, 58 ist mit einer weiteren solchen Gruppe von zwei Batteriezellen elektrisch in Reihe geschaltet. Jeweils eine Stromschiene 60 sorgt also sowohl für das Parallelschalten zweier Batteriezellen 56, 58 als auch für das In-Reihe-Schalten von zwei solchen Zweiergruppen. Dementsprechend verbindet eine jeweilige Stromschiene 60 bei der in Fig. 5 gezeigten Batterie 54 zwei Minuspole 22 und zwei Pluspole 20 von vier Batteriezellen miteinander. Zwei kürzere Stromschienen 62, 64 bilden einen elektrisch negativen und einen elektrisch positiven Anschluss der Batterie 54.

Fig. 6 zeigt demgegenüber eine Batterie 10, bei welcher ein und dieselbe Stromschiene 60 mit den vier Pluspolen 20 und mit den vier Minuspolen 22 von acht Batteriezellen verbunden ist. Es sind hierbei also durch jeweils eine der Stromschienen 60 jeweils vier Batteriezellen parallel geschaltet und zwei solche Vierergruppen von Batteriezellen sind mittels einer jeweiligen der Stromschienen 60 elektrisch in Reihe geschaltet.

Da jedoch die Kopfbereiche von jeweils zwei elektrisch einander parallel geschalteten Batteriezellen einander zugewandt und mittels des elektrischen leitfähigen Klebstoffs 25 mit der jeweiligen Stromschiene 60 verklebt sind, ist die gesamte Länge an Stromschienen 60 in der Batterie 10 deutlich geringer als die gesamte Länge an Stromschienen 60 bei der Batterie 54 gemäß Fig. 5. Zwei solcher Stromschienen 60 sind hierbei in der Lage, vier Stromschienen 60 zu ersetzen, wie sie bei der Batterie 54 gemäß Fig. 5 verwendet werden.

Es ergeben sich durch die vergleichsweise geringe Länge an Stromschienen 60 in der Batterie 10 gemäß Fig. 6 besonders kurze Strompfade, eine Materialeinsparung sowie ein geringerer Gesamtwiderstand. Der Widerstand der jeweiligen Stromschiene 60 ist nämlich der Länge der Stromschiene 60 proportional.

Zur besseren Übersichtigkeit sind in Fig. 6 die zu den Pluspolen 20 sowie den Minuspolen 22 des auf dem Kopf stehenden Zellpakets gehörigen Batteriezellen nicht dargestellt. Vielmehr sind lediglich die auf die Oberseite der jeweiligen Stromschienen 60 aufgeklebten Pluspole 20 und Minuspole 22 dieser Batteriezellen gezeigt.

Zudem fluchten bei der tatsächlichen Batterie 10 die in die Hochrichtung der Batterie 10 einander gegenüberliegenden Pluspole 20 bzw. Minuspole 22 miteinander, während diese einander zugewandten und mit jeweiligen Unterseiten bzw. Oberseiten der Stromschienen 60 verklebten Pluspole 20 bzw. Minuspole 22 in Fig. 6 räumlich versetzt dargestellt sind.

Auch bei der Batterie 10 gemäß Fig. 6 sind durch die im Vergleich zu den Stromschienen 60 etwas kürzeren Stromschienen 62, 64 ein elektrisch negativer bzw. ein elektrisch positiver Anschluss der Batterie 10 bereitgestellt.

## Patentansprüche

1. Batterie, insbesondere für ein Kraftfahrzeug, mit einer Mehrzahl von Batteriezellen (12, 14), wobei jede der Batteriezellen (12, 14) in einem Kopfbereich (16) ein erstes elektrisches Kontaktelement (20) mit einer ersten Polarität und ein zweites elektrisches Kontaktelement (22) mit einer zweiten Polarität aufweist, und wobei wenigstens zwei der Batteriezellen (12, 14) mittels eines jeweiligen, den Kontaktelementen (20, 22) gleicher Polarität zugeordneten Verbindungselements (24, 26) elektrisch parallel geschaltet sind,
wobei in der Batterie (10) die Kopfbereiche (16) der wenigstens zwei elektrisch parallel geschalteten Batteriezellen (12, 14) einander zugewandt und die Kontaktelemente (20, 22) gleicher Polarität der wenigstens zwei elektrisch parallel geschalteten Batteriezellen (12, 14) mit dem jeweiligen Verbindungselement (24, 26) stoffschlüssig verbunden sind, wobei das jeweilige Verbindungselement (24, 26) als im Querschnitt rechteckige Stromschiene ausgebildet ist,
**dadurch gekennzeichnet, dass**
das jeweilige Verbindungselement (24, 26) zwischen den beiden Kontaktelementen (20, 22) gleicher Polarität der mit ihren Kopfbereichen (16) einander zugewandten Batteriezellen (12, 14) angeordnet ist, wobei Oberseiten und Unterseiten des jeweiligen Verbindungselements (24, 26) mit den Kontaktelementen (20, 22) gleicher Polarität der wenigstens zwei elektrisch parallel geschalteten Batteriezellen (12, 14) verbunden sind.

2. Batterie nach Anspruch 1,
**dadurch gekennzeichnet, dass**
die Kontaktelemente (20, 22) gleicher Polarität mit dem zwischen diesen angeordneten Verbindungselement (24, 26) mittels eines elektrisch leitfähigen Klebstoffs (25) verbunden sind.

3. Batterie nach Anspruch 1 oder 2,
**dadurch gekennzeichnet, dass**
die Kontaktelemente (20, 22) gleicher Polarität eine jeweilige flache Stirnseite aufweisen, welche mit dem Verbindungselement (24, 26) in Anlage ist.

4. Batterie nach einem der Ansprüche 1 bis 3,
**dadurch gekennzeichnet, dass**
mittels eines jeweiligen, die Kontaktelemente (20, 22) gleicher Polarität kontaktierenden Verbindungselements (24, 26) ein Vielfaches von zwei Batteriezellen (12, 14, 28, 30, 32, 34, 36, 38) elektrisch parallel geschaltet ist.

5. Batterie nach einem der Ansprüche 1 bis 4,
**dadurch gekennzeichnet, dass**
die Batteriezellen (12, 14) jeweilige Fußbereiche (18) aufweisen, welche den Kopfbereichen (16) gegenüberliegen, wobei zumindest einer der Fußbereiche (18) der wenigstens zwei elektrisch parallel geschalteten Batteriezellen (12, 14) mit einer, insbesondere von einem Kühlmedium durchströmbaren, Kühleinrichtung (42, 44, 50) in Anlage ist.

6. Batterie nach Anspruch 5,
**dadurch gekennzeichnet, dass**
die Batterie (10) ein erstes Zellpaket (40) mit den wenigstens zwei elektrisch parallel geschalteten Batteriezellen (12, 14) und ein zweites Zellpaket (46) mit den wenigstens zwei elektrisch parallel geschalteten Batteriezellen (48, 52) umfasst, wobei einander zugewandte Fußbereiche (18) der Batteriezellen (14, 52) der beiden Zellpakete (40, 46) mit derselben Kühleinrichtung (44) in Anlage sind.

7. Kraftfahrzeug mit einer Batterie (10) nach einem der Ansprüche 1 bis 6, wobei eine durch die Kopfbereiche (16) der wenigstens zwei elektrisch parallel geschalteten Batteriezellen (12, 14) definierbare Ebene (E) zumindest im Wesentlichen mit einer Fahrzeughochrichtung zusammenfällt.

8. Kraftfahrzeug nach Anspruch 7,
**dadurch gekennzeichnet, dass**
durch wenigstens eine Kühleinrichtung (42, 44) der Batterie (10) eine die Kopfbereiche (16) vor einer unfallbedingten Kraftbeaufschlagung schützende Seitenwand der Batterie (10) bereitgestellt ist.

## Claims

1. Battery, more particularly for a motor vehicle, with a plurality of battery cells (12, 14), wherein in a head area (16) each of the battery cells (12, 14) has a first electrical contact element (20) with a first polarity and a second electrical contact element (22) with a second polarity, and wherein at least two of the battery cells (12, 14) are electrically connected in parallel to each other by means of a connection element (24, 26) assigned to the contact elements (20, 22) of the same polarity,
wherein in the battery (10) the head areas (16) of the at least two battery cells (12, 14) electrically connected in parallel face each other and the contact elements (20, 22) of the same polarity of the two battery cells (12, 14) electrically connected in parallel are firmly bonded to the relevant connection element (24, 26), wherein the relevant connection element (24, 26) is designed as a bus bar which is rectangular in cross-section,
**characterised in that**
the relevant connection element (24, 26) is arranged between the two contact elements (20, 22) of the same polarity of the battery cells (12, 14), the head areas (16) of which face each other, wherein upper sides and lower sides of the relevant connection element (24, 26) are connected to the contact elements (20, 22) of the same polarity of the at least two battery cells (12, 14) electrically connected in parallel.

2. Battery according to claim 1
**characterised in that**
the contact elements (20, 22) of the same polarity are connected to the connection element (24, 26) arranged between them by means of an electrically conductive adhesive (25).

3. Battery according to claim 1 or 2
**characterised in that**
the contact elements (20, 22) of the same polarity each have a flat end surface which is in contact with the connection element (24, 26).

4. Battery according to any one of claims 1 to 3
**characterised in that**
by means of a connection element (24, 26) contacting the contact elements (20, 22) of the same polarity a multiple of two battery cells (12, 14, 28, 30, 32, 34, 36, 38) is electrically connected in parallel.

5. Battery according to any one of claims 1 to 4
**characterised in that**
the battery cells (12, 14) each have foot areas (18), which are opposite the head areas (16), wherein at least one of the foot areas (18) of the at least two battery cells (12, 14) electrically connected in parallel, is in contact with a cooling device (42, 44, 50), more particularly one through which a cooling medium can flow.

6. Battery according to claim 5
**characterised in that**
the battery (10) comprises a first cell pack (40) with the at least two battery cells (12, 14) electrically connected in parallel and a second cell pack (46) with the at least two battery cells (48, 52) electrically connected in parallel, wherein facing foot areas (18) of the battery cells (14, 52) of the two cell packs (40, 46) are in contact with the same cooling device (44).

7. Motor vehicle with a battery (10) according to any one of claims 1 to 6, wherein a plane (E), definable by the head areas (16) of the at least two battery cells (12, 14) electrically connected in parallel, essentially coincides with a vertical direction of the vehicle.

8. Motor vehicle according to claim 7
**characterised in that**
through the at least one cooling device (42, 44) of the battery (10) a side wall of the battery (10) protecting the head areas (16) against an accident-related force impact is provided.

## Revendications

1. Batterie, en particulier pour un véhicule automobile, avec une multiplicité de cellules de batterie (12, 14), chacune des cellules de batterie (12, 14) comportant dans une zone de tête (16) un premier élément de contact électrique (20) avec une première polarité et un deuxième élément de contact électrique (22) avec une deuxième polarité et au moins deux des cellules de batterie (12, 14) étant branchées électriquement en parallèle au moyen d'un élément de liaison (24, 26) respectif associé aux éléments de contact (20, 22) de même polarité,
dans la batterie (10), les zones de tête (16) des au moins deux cellules de batterie (12, 14) branchées électriquement en parallèle étant en face l'une de l'autre et les éléments de contact (20, 22) de même polarité des au moins deux cellules de batterie (12, 14) branchées électriquement en parallèle étant reliées par correspondance de matière à l'élément de liaison (24, 26) respectif, l'élément de liaison (24, 26) respectif étant conçu comme une barre conductrice rectangulaire en section transversale,
**caractérisée en ce que** l'élément de liaison (24, 26) respectif est agencé entre les deux éléments de contact (20, 22) de même polarité des cellules de batterie (12, 14) se faisant face l'une l'autre avec leurs zones de tête (16), les dessus et dessous de l'élément de liaison (24, 26) respectif étant reliés aux éléments de contact (20, 22) de même polarité des au moins deux cellules de batterie (12, 14) branchées électriquement en parallèle.

2. Batterie selon la revendication 1, **caractérisée en ce que** les éléments de contact (20, 22) de même polarité sont reliés à l'élément de liaison (24, 26), agencé entre eux, au moyen d'un adhésif électriquement conducteur (25).

3. Batterie selon la revendication 1 ou 2, **caractérisée en ce que** les éléments de contact (20, 22) de même polarité ont un côté frontal respectif plat qui est en appui contre l'élément de liaison (24, 26).

4. Batterie selon l'une des revendications 1 à 3, **caractérisée en ce qu'**un multiple de deux cellules de batterie (12, 14, 28, 30, 32, 34, 36, 38) est branché électriquement en parallèle au moyen d'un élément de liaison respectif (24, 26) mettant en contact les éléments de contact (20, 22) de même polarité.

5. Batterie selon l'une des revendications 1 à 4, **caractérisée en ce que** les cellules de batterie (12, 14) comportent des zones de pied respectives (18) qui sont à l'opposé des zones de tête (16), au moins l'une des zones de pied (18) des au moins deux cellules de batterie (12, 14) branchées électriquement en parallèle étant en appui contre un dispositif de refroidissement (42, 44, 50) pouvant notamment être traversé par un fluide de refroidissement.

6. Batterie selon la revendication 5, **caractérisée en ce que** la batterie (10) comprend un premier paquet de cellules (40) avec les au moins deux cellules de batterie (12, 14) branchées électriquement en parallèle et un deuxième paquet de cellules (46) avec les au moins deux cellules de batterie (48, 52) branchées électriquement en parallèle, des zones de pied (18), proches l'une de l'autre, des cellules de batterie (14, 52) des deux paquets de cellules (40, 46) étant en appui contre le même dispositif de refroidissement (44).

7. Véhicule automobile avec une batterie (10) selon l'une des revendications 1 à 6, dans lequel un plan (E) pouvant être défini par les zones de tête (16) des au moins deux cellules de batterie (12, 14) branchées électriquement en parallèle coïncide au moins globalement avec le sens de la hauteur du véhicule.

8. Véhicule automobile selon la revendication 7, **caractérisé en ce qu'**une paroi latérale, protégeant les zones de tête (16) contre une force exercée lors d'un accident, de la batterie (10) est formée par au moins un dispositif de refroidissement (42, 44) de la batterie (10).
